# EUROPEAN PATENT SPECIFICATION

(11) **EP 1 782 400 B1**
(45) Date of publication and mention of the grant of the patent: **02.12.2009**
(21) Application number: 04779490.4
(22) Date of filing: 29.07.2004
(51) Int. Cl.: G07F 13/00

(54) **IN DISPENSER POINT-OF SALE MODULE FOR FUEL DISPENSERS**
VERKAUFSPUNKT-MODUL IN EINER ABGABEVORRICHTUNG FÜR KRAFTSTOFF-ABGABEVORRICHTUNGEN
MODULE POINT DE VENTE INTEGRE A UN DISTRIBUTEUR POUR DISTRIBUTEURS DE COMBUSTIBLE

(43) Date of publication of application: 09.05.2007
(73) Proprietor: DRESSER, INC., Addison, TX 75001 (US)
(72) Inventor: NEGLEY, III, Scott, R., Austin, TX 78750 (US); BLANCHARD, David, K., Taylor, TX 76574 (US); LEWIS, Craig, Arvada, CO 80004 (US); HARRELL, Daniel C., Roundrock, TX 78681 (US)
(74) Representative: HOFFMANN EITLE
(86) International application number: PCT/US2004/024445
(87) International publication number: WO 2006/022655

(56) References cited:
- US-A- 3 184 714
- US-A- 3 786 421
- US-A- 6 152 591
- US-A1- 2004 204 999
- US-B1- 6 193 154
- US-B1- 6 687 345

## Description

### BACKGROUND OF THE INVENTION

### Technical Field of the Invention

The present invention relates to fuel dispensers, and more particularly, to fuel dispensers including a point-of-sale control module within the fuel dispenser.

### Description of Related Art

The retail petroleum industry utilizes various brands of fuel dispensers for dispensing fuel to customers. Some form of remote dispenser controller is typically used for controlling the dispensers. The remote dispenser controller is often located in a manner where a site attendant can monitor and control particular dispensers from a building at the site. The controllers send data signals (i.e., commands) to the dispensers which can include price, payment data for the fuel dispensed, preset amounts of fuel to dispense, and pump authorization to dispense fuel. The dispensers likewise send data signals to the controller including pump number, pump status and dispensed fuel volume and sale value.

Point-of-sale (POS) systems are widely used in the industry to control fuel dispensers. Point-of-sale systems generally utilize an open architecture hardware platform with POS application software programming to integrate functions including cash register, dispenser control, credit card, inventory management, processing, and scanning. US 6.193.154 discloses an example of such a system.

The problem with the interaction between existing point-of-sale systems and fuel dispensing systems is the dependency of the fuel dispenser on the external point-of-sale equipment. Existing dispensers are dumb devices, fully dependent upon the external point-of-sale equipment to control financial transactions and pump functions. Once the point-of-sale link between the point-of-sale equipment and the fuel dispenser is removed, the fuel dispensers are incapable of operation. Thus, there is a need for improving the functionality of fuel dispensers to enable them to continue operation in the absence of a link with the point-of-sale equipment control.

### SUMMARY OF THE INVENTION

According to the invention from one aspect, there is provided a fuel dispenser, comprising: a display; a user interface; a dispenser computer for controlling sale and pump control functions; a dispenser manager to which the display, user interface and dispenser computer are coupled, for controlling electronic functions of the display, user interface and dispenser computer; and a point-of-sale (POS) module associated with the dispenser manager for providing point-of-sale functionalities within the fuel dispenser during loss of communication with external (POS) equipment configured to provide point-of-sale functionalities, wherein the point-of-sale module is arranged to remain in an idle state when the fuel dispenser has a connection to an external point-of-sale link to the external (POS) equipment and to become active responsive to disconnection of the external point-of-sale link.

According to the invention from another aspect, there is provided a fuel dispenser, comprising: a display; a user interface; a dispenser computer for controlling sale and pump control functions; a dispenser manager to which the display, user interface and dispenser computer are coupled, for controlling electronic functions of the display, user interface and dispenser computer; and a point-of-sale module associated with the dispenser manager operable to provide point-of-sale functionalities during loss of communication with external POS equipment configured to provide scaled-back point-of-sale functionality, wherein the point-of-sale module is arranged to remain in an active state on a full-time basis to provide point-of-sale functionalities when there is communication with the external POS equipment providing scaled-back point-of-sale functionality.

The embodiment of the present invention to be described overcomes the foregoing and other problems with a fuel dispenser including a dispenser manager for controlling electronic functions of the fuel dispenser. POS functionality resides in the dispenser electronics to provide a layer of redundant fault tolerance. A controller controls the fuel dispensing components of the fuel dispenser. A point-of-sale module associated with the dispenser manager provides point-of-sale functionalities within the fuel dispenser.

### BRIEF DESCRIPTION OF THE DRAWINGS

A more complete understanding of the method and apparatus of the present invention may be obtained by reference to the following Detailed Description, given by way of example, when taken in conjunction with the accompanying Drawings wherein:
Figure 1 is a block diagram illustrating the environment of operation of one form of system of the present invention;
Figure 2 illustrates the fuel dispenser having in-dispenser point-of-sale module, included in the system;
Figures 3-5 illustrate alternative configurations of a fuel dispenser which may include a point-of-sale module; and
Figure 6 is a flow diagram describing the operation of the in-dispenser point- of-sale module.

### DETAILED DESCRIPTION OF EXEMPLARY EMBODIMENTS OF THE INVENTION

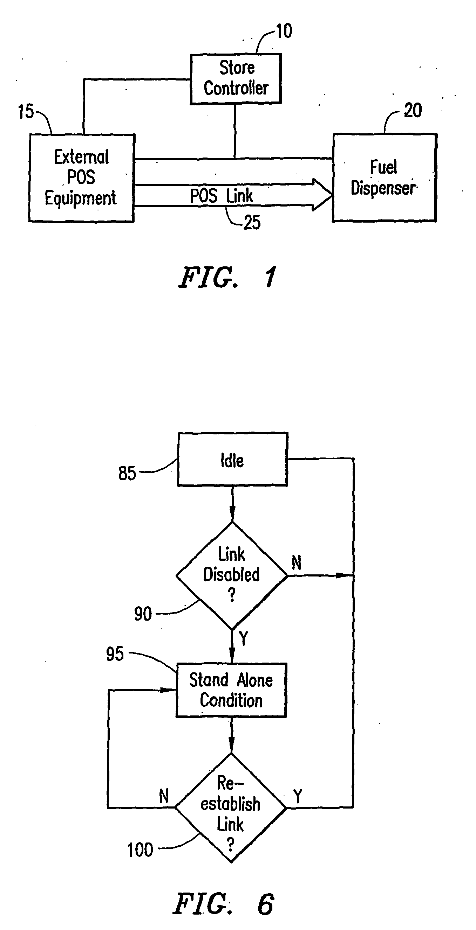

Referring now to the drawings, and more particularly to Figure 1, there is illustrated the operating environment of the one form of system of the present invention. An optional store controller 10 and external point-of-sale (POS) equipment 15 are interconnected with a fuel dispenser 20. While Figure 1 only illustrates a single fuel dispenser 20, it should be realized that the store controller 10 and external POS equipment 15 would normally be interconnected with multiple fuel dispensers at a retail fuel dispensing facility. The fuel dispenser 20 within existing systems is a dumb device which is fully dependent upon information transmitted to the fuel dispenser 20 from the external POS equipment 15 over a POS link 25. The transmitted POS information enables the POS equipment 15 to control financial transactions and pump functions.

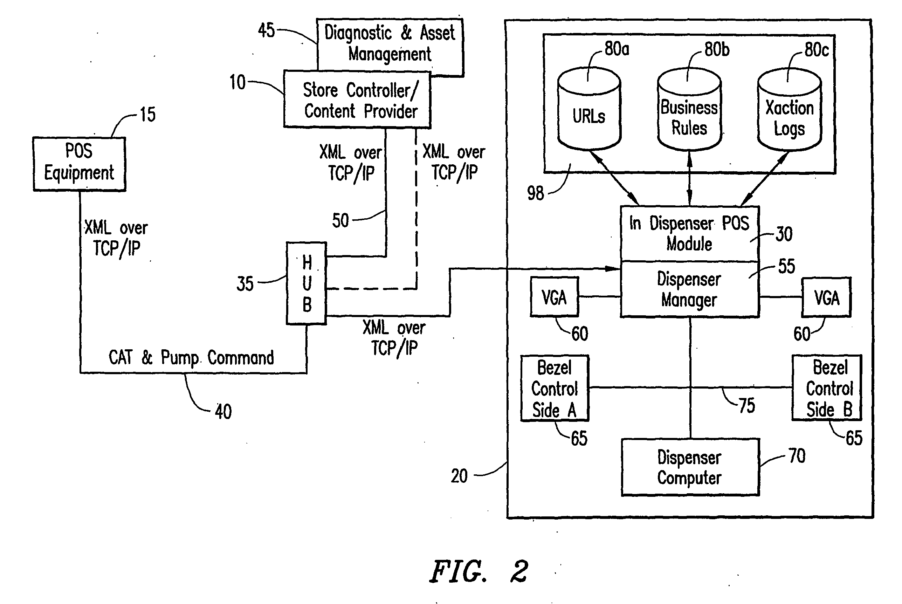

An in-dispenser point-of-sale module 30 is included (Figure 2) within a fuel dispenser 20, enabling the fuel dispenser 20 to conduct business in a stand alone mode even if the point-of-sale equipment 15, HUB 35 or the POS link 40 should go down. This improved system is more fully illustrated in Figure 2. The point-of-sale equipment 15 provides point-of-sale functionalities which may include cash register, dispenser control, transaction card processing, and/or bar code scanning. Store controller 10 is optionally coupled to the point-of-sale equipment 15 and the fuel dispenser 20 via a hub 35. The point-of-sale equipment 15 generates customer activated terminal (CAT) and pump commands which are transmitted to the fuel dispenser 20 through the hub 35 via link 40. The site controller 10 and diagnostic and asset management functionalities 45 are linked with hub 35 via link 50.

The fuel dispenser 20 includes a dispenser manager 55, a pair of VGA displays 60 including soft keys and a controller 65 for managing peripheral elements or bezel. The dispenser manager 55 or In-Dispenser POS 30 drives the content associated with the VGA display(s) 60 to provide interaction with a customer. The bezel controller 65 provides for and controls user inputs to the fuel dispenser 20. The dispenser computer 70 controls fuel storage tank submersible pumps and fuel control valves and monitors fuel flow information via metering and reporting sub systems, totals by grade, errors, etc. The dispenser manager 55 also interoperates with the dispenser computer 70 to deliver commands and receive transaction data and status. The dispenser manager 55 issues commands to the dispenser computer 70 over an internal communications link 75 of a given dispenser 20. Control, status, real-time diagnostic, error codes and data are also exchanged over the internal communications link 75. The dispenser computer 70 controls all hydraulic elements of the dispenser necessary to carry out fuel dispensing functionalities. The dispenser computer 70 also drives sale progress displays on the sales/volume displays of the dispenser 20. The dispenser manager 55 also collects and maintains status of the fuel dispenser 20 and reports the status information to the site controller 10 and/or point-of-sale equipment 15.

An in-dispenser point-of-sale module 30 associated with the dispenser manager 55 within the fuel dispenser 20 provides a fault tolerant architecture assuring equipment functionality in the event that the POS equipment 15, HUB 35 or link 40 crashes or otherwise goes off-line. All relevant POS functionalities reside within the in-dispenser POS module 30 including, but not limited to, store/forwarding, transaction logging, URL and credit card processing. This is really a subset of that functionality necessary to operate a pump autonomously that reside in the POS equipment of the store host. A number of databases 80 would be stored within a memory 98 in the fuel dispenser 20 to include the data necessary for the operation of the in dispenser POS module 30 in its stand alone mode. This information could include, but is not limited to URLs 80a or display content consisting of customer instructional prompts, fueling status information, advertisements, etc., various business rules 80b (consisting of fuel prices, tender medial authorization information, pump operational rules, etc.) for operation of the point-of-sale system, and completed transaction and error logs 80c.

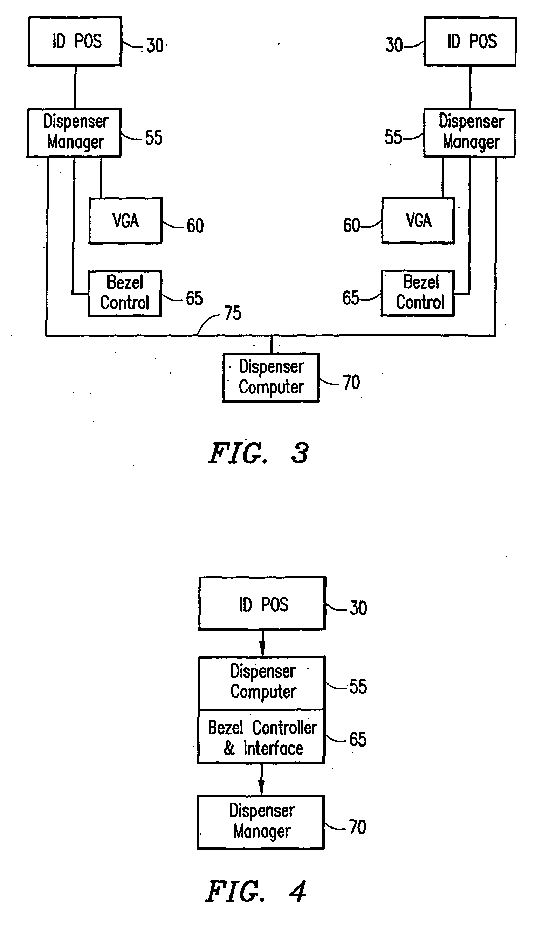

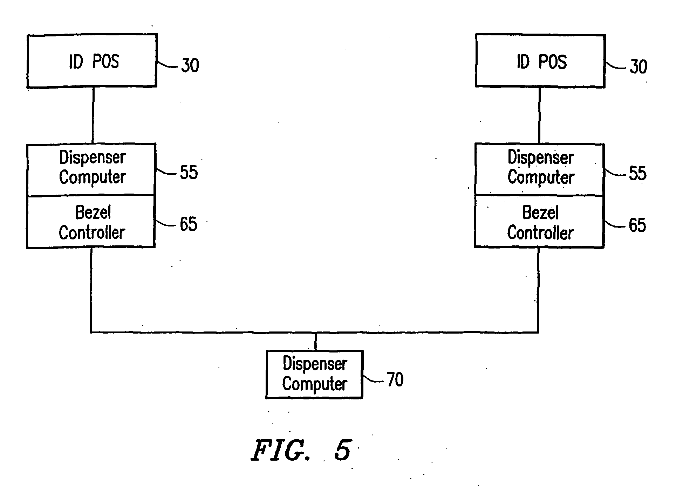

The fuel dispenser 20 with which the point-of-sale module 30 is associated is not limited to the configuration illustrated in Figure 2. It may also include a number of different configurations as illustrated in Figures 3-5 wherein like components are identified by similar reference numeral. The functions of the fuel dispensers and their associated components are similar to those as described with respect to Figure 2.

Referring now also to Figure 6, there is described the operation of the in-dispenser POS module 30. The in dispenser POS module 30 remains in an idle condition at 85 while the external POS equipment 50 is operating in normal application mode. However, once inquiry step 90 determines that the link with the external POS equipment 15 is lost, the in-dispenser point-of-sale module 30 begins to operate in a stand alone condition at 95 until inquiry step 100 determines that the POS link with the external equipment has been re-established. After the external POS link is re-established, the in dispenser POS module 30 returns to the idle condition. Alternatively, according to an arrangement forming an embodiment of the other aspect of the invention referred to above, the in-dispenser POS module may operate on a full time basis. This would enable a scaled back version of the of the store controller 10 as described with respect to Figure 1 since most POS functionalities could be handled by the fuel dispenser.

The previous description is of a preferred embodiment for implementing the invention, and the scope of the invention should not necessarily be limited by this description. The scope of the present invention is instead defined by the following claims.

## Claims

1. A fuel dispenser, comprising:
a display (60);
a user interface (65);
a dispenser computer (70) for controlling sale and pump control functions;
a dispenser manager (55) to which the display (60), user interface (65) and dispenser computer (70) are coupled, for controlling electronic functions of the display, user interface and dispenser computer; and
a point-of-sale (POS) module (30) associated with the dispenser manager for providing point-of-sale functionalities within the fuel dispenser during loss of communication with external POS equipment (15) configured to provide point-of-sale functionalities,
wherein the point-of-sale module is arranged to remain in an idle state when the fuel dispenser has a connection to an external point-of-sale link (25) to the external POS equipment and to become active responsive to disconnection of the external point-of-sale link.

2. The fuel dispenser of claim 1, wherein the point-of-sale module (30) is arranged to return to the idle state responsive to reconnection of the external point-of-sale link (25).

3. The fuel dispenser of claim 1 or 2, further including at least one database (80) accessible by the point-of-sale module (30), including point-of-sale data.

4. The fuel dispenser of claim 3, wherein the point-of-sale data comprises URLs.

5. The fuel dispenser of claim 3, wherein the point-of-sale data comprises display content consisting of customer instructional prompts, fueling status information, and advertisements.

6. The fuel dispenser of claim 3, wherein the point-of-sale data comprises Business Rules.

7. The fuel dispenser of Claim 3, wherein the point-of-sale data comprises fuel prices, tender media authorization information, and pump operational rules.

8. The fuel dispenser of claim 3, wherein the point-of-sale data comprises completed transaction and error logs.

9. The fuel dispenser of any preceding claim, wherein the dispenser manager (55) is arranged to communicate with external devices using at least one of XML over a TCP/IP link or PNA wireless.

10. The fuel dispenser of any preceding claim, wherein the user interface (65) further includes a bezel control.

11. The fuel dispenser of any preceding claim, wherein the user interface (65) comprises a video display and soft keys.

12. The fuel dispenser of any preceding claim, wherein the user interface (65) comprises a touchscreen.

13. A fuel dispenser (20), comprising:
a display (60);
a user interface (65);
a dispenser computer (70) for controlling sale and pump control functions;
a dispenser manager (55) to which the display (60), user interface (65) and dispenser computer (70) are coupled, for controlling electronic functions of the display, user interface and dispenser computer; and
a point-of-sale (POS) module (30) associated with the dispenser manager operable to provide point-of-sale functionalities during loss of communication with external POS equipment (15) configured to provide scaled-back point-of-sale functionality,
wherein the point-of-sale module is arranged to remain in an active state on a full-time basis to provide point-of-sale functionalities when there is communication with the external POS equipment providing scaled-back point-of-sale functionality.

## Patentansprüche

1. Treibstoffausgeber, aufweisend:
eine Anzeige (60);
ein Benutzerinterface (65);
einen Ausgabecomputer (70) zum Steuern von Verkaufs- und Pumpsteuerungsfunktionen;
einen Ausgabeleiter (55), mit dem die Anzeige (60), das Benutzerinterface (65) und der Ausgabecomputer (70) gekoppelt sind, zum Steuern elektronischer Funktionen der Anzeige, des Benutzerinterface und des Ausgabecomputers; und
ein Verkaufspunkt-(POS)-Modul (30), das mit dem Ausgabeleiter zum Bereitstellen von Verkaufspunktfunktionalitäten innerhalb des Treibstoffausgebers während eines Kommunikationsverlusts mit externen POS-Geräten (15) verbunden ist, das eingerichtet ist, um Verkaufspunktfunktionalitäten bereitzustellen,
wobei das Verkaufspunktmodul angeordnet ist, um in einem Leerlaufzustand zu verbleiben, wenn der Treibstoffausgeber eine Verbindung mit einer externen Verkaufspunktverbindung (25) mit den externen POS-Geräten aufweist, und um als Folge einer Trennung der externen Verkaufspunktverbindung aktiv zu werden.

2. Treibstoffausgeber nach Anspruch 1, wobei das Verkaufspunktmodul (30) angeordnet ist, um in den Leerlaufzustand als Folge eines Wiederverbindens der externen Verkaufspunktverbindung (25) zurückzukehren.

3. Treibstoffausgeber nach Anspruch 1 oder 2, ferner enthaltend zumindest eine Datenbank (80), die durch das Verkaufspunktmodul (30) zugänglich ist, die Verkaufspunktdaten enthält.

4. Treibstoffausgeber nach Anspruch 3, wobei die Verkaufspunktdaten URLs umfassen.

5. Treibstoffausgeber nach Anspruch 3, wobei die Verkaufspunktdaten einen Anzeigeinhalt umfassen, der aus Kundenanweisungsanzeigen, einer Betankungsstatusinformation und Werbung besteht.

6. Treibstoffausgeber nach Anspruch 3, wobei die Verkaufspunktdaten Geschäftsregeln umfassen.

7. Treibstoffausgeber nach Anspruch 3, wobei die Verkaufspunktdaten Treibstoffpreise, Angebotsmedien-Authorisierungsinformationen und Pumpenbetriebsregeln umfassen.

8. Treibstoffausgeber nach Anspruch 3, wobei die Verkaufspunktdaten Aufzeichnungen von abgeschlossenen Transaktionen und Fehleraufzeichnungen umfassen.

9. Treibstoffausgeber nach einem vorgehenden Anspruch, wobei der Ausgabeleiter (55) angeordnet ist, um mit externen Einrichtungen unter Verwendung von XML über eine TCP/IP-Verbindung und/oder PNA Wireless zu kommunizieren.

10. Treibstoffausgeber nach einem vorgehenden Anspruch, wobei das Benutzerinterface (65) ferner eine Blendensteuerung enthält.

11. Treibstoffausgeber nach einem vorgehenden Anspruch, wobei das Benutzerinterface (65) eine Videoanzeige und Softkeys umfasst.

12. Treibstoffausgeber nach einem vorgehenden Anspruch, wobei das Benutzerinterface (65) einen Touchscreen umfasst.

13. Treibstoffausgeber (20), aufweisend:
eine Anzeige (60);
ein Benutzerinterface (65);
einen Ausgabecomputer (70) zum Steuern von Verkaufs- und Pumpsteuerungsfunktionen;
einen Ausgabeleiter (55), mit dem die Anzeige (60), das Benutzerinterface (65) und der Ausgabecomputer (70) gekoppelt sind, um elektronische Funktionen der Anzeige, des Benutzerinterface und des Ausgabecomputers zu steuern; und
ein Verkaufspunkt-(POS)-Modul (30), das mit dem Ausgabeleiter verbunden ist, das betreibbar ist, um Verkaufspunktfunktionalitäten während eines Kommunikationsverlusts mit externen POS-Geräten (15) bereitzustellen, das eingerichtet ist, um eine reduzierte Verkaufspunktfunktionalität bereitzustellen,
wobei das Verkaufspunktmodul angeordnet ist, um in einem aktiven Zustand auf einer Vollzeitbasis zu verbleiben, um Verkaufspunktfunktionalitäten bereitzustellen, wenn eine Kommunikation mit den externen POS-Geräten vorliegt, wodurch eine reduzierte Verkaufspunktfunktionalität bereitgestellt wird.

## Revendications

1. Dispositif de distribution de carburant, comprenant :
un affichage (60) ;
une interface utilisateur (65) ;
un ordinateur de dispositif de distribution (70) destiné à commander des fonctions de vente et de commande de pompe ;
un gestionnaire de dispositif de distribution (55) auquel l'affichage (60), l'interface utilisateur (65) et l'ordinateur de dispositif de distribution (70) sont couplés, destiné à commander les fonctions électroniques de l'affichage, de l'interface utilisateur et de l'ordinateur de dispositif de distribution ; et
un module point de vente (POS) (30) associé au gestionnaire de dispositif de distribution destiné à fournir des fonctionnalités de point de vente à l'intérieur du dispositif de distribution de carburant au cours d'une perte de communication avec un équipement de POS extérieur (15) configuré de manière à fournir des fonctionnalités de point de vente,
dans lequel le module point de vente est agencé de manière à rester dans un état inactif lorsque le dispositif de distribution de carburant dispose d'une connexion à une liaison de point de vente extérieure (25) vers l'équipement de POS extérieur, et à devenir actif en réponse à une déconnexion de la liaison de point de vente extérieure.

2. Dispositif de distribution de carburant selon la revendication 1, dans lequel le module de point de vente (30) est agencé de manière à retourner à l'état inactif en réponse à une reconnexion de la liaison de point de vente extérieure (25).

3. Dispositif de distribution de carburant selon la revendication 1 ou la revendication 2, comprenant en outre au moins une base de données (80) à laquelle peut accéder le module point de vente (30), qui comprend des données de point de vente.

4. Dispositif de distribution de carburant selon la revendication 3, dans lequel les données de point de vente comprennent des URL.

5. Dispositif de distribution de carburant selon la revendication 3, dans lequel les données de point de vente comprennent un contenu d'affichage qui se compose d'invites d'instructions de client, d'informations d'état de remplissage de carburant et d'annonces.

6. Dispositif de distribution de carburant selon la revendication 3, dans lequel les données de point de vente comprennent des règles commerciales.

7. Dispositif de distribution de carburant selon la revendication 3, dans lequel les données de point de vente comprennent des prix de carburant, des informations d'autorisation de mode de paiement, et des règles de fonctionnement de pompe.

8. Dispositif de distribution de carburant selon la revendication 3, dans lequel les données de point de vente comprennent des journaux de transactions effectuées et d'erreurs complétées.

9. Dispositif de distribution de carburant selon l'une quelconque des revendications précédentes, dans lequel le gestionnaire de dispositif de distribution (55) est agencé de manière à communiquer avec des dispositifs extérieurs en utilisant l'un au moins d'un XML sur une liaison TCP / IP ou d'un PNA sans fil.

10. Dispositif de distribution de carburant selon l'une quelconque des revendications précédentes, dans lequel l'interface utilisateur (65) comprend en outre une commande de cadran.

11. Dispositif de distribution de carburant selon l'une quelconque des revendications précédentes, dans lequel l'interface utilisateur (65) comprend un affichage vidéo et des touches programmables.

12. Dispositif de distribution de carburant selon l'une quelconque des revendications précédentes, dans lequel l'interface utilisateur (65) comprend un écran tactile.

13. Dispositif de distribution de carburant (20), comprenant :
un affichage (60) ;
une interface utilisateur (65) ;
un ordinateur de dispositif de distribution (70) destiné à commander des fonctions de vente et de commande de pompe ;
un gestionnaire de dispositif de distribution (55) auquel l'affichage (60), l'interface utilisateur (65) et l'ordinateur de dispositif de distribution (70) sont couplés, destiné à commander les fonctions électroniques de l'affichage, de l'interface utilisateur et de l'ordinateur de dispositif de distribution ; et
un module point de vente (POS) (30) associé au gestionnaire de dispositif de distribution opérationnel pour fournir des fonctionnalités de point de vente au cours d'une perte de communication avec un équipement de POS extérieur (15) configuré de manière à fournir une fonctionnalité de point de vente réduite,
dans lequel le module de point de vente est agencé de manière à rester dans un état actif sur une base à plein temps de façon à fournir des fonctionnalités de point de vente quand il y a une communication avec l'équipement de POS extérieur qui fournit une fonctionnalité de point de vente réduite.
